# EUROPEAN PATENT SPECIFICATION

(11) **EP 3 355 089 B1**
(45) Date of publication and mention of the grant of the patent: **16.11.2022**
(21) Application number: 17020122.2
(22) Date of filing: 28.03.2017
(51) Int. Cl.: G02B 6/02

(54) **OPTICAL FIBER FOR INDOOR APPLICATIONS**
OPTISCHE FASER FÜR INNENANWENDUNGEN
FIBRE OPTIQUE POUR DES APPLICATIONS INTÉRIEURES

(30) Priority: 25.01.2017 IN 201721002861
(43) Date of publication of application: 01.08.2018
(73) Proprietor: Sterlite Technologies Ltd, Maharashtra 431 136 (IN)
(72) Inventor: Pandey, Anand, 431136 Maharashtra (IN); Kumar, Sravan, 431136 Maharashtra (IN); Coppin, Phill, 431136 Maharashtra (IN); Sahoo, Kishore, 431136 Maharashtra (IN)
(74) Representative: Hepworth Browne

(56) References cited:
- EP-A1- 2 597 500
- JP-A- 2003 329 901
- US-A1- 2008 131 062
- US-B1- 6 804 442

## Description

### TECHNICAL FIELD

The present disclosure relates to the field of fiber optic transmission and more specifically, the present disclosure relates to an optical fiber for indoor applications.

### BACKGROUND

With the advancements in technology, optical fibers have been increasingly employed for various telecommunication applications. One such application is fiber to the home application. These optical fibers are deployed from a central office to various residences, offices, businesses and the like. In addition, these optical fibers provide high bandwidth and high internet speeds. Typically, these optical fibers are coated with multiple coating layers in order to meet the demands of the consumer. These multiple coating layers determine the physical fiber optic characteristics such as bending, chemical resistance, and mechanical strength. For example, these multiple coating layers protect the optical fibers from mechanical damage and preserve the ability of the optical fibers to transmit signals.

In one of the prior art with patent number US7848604, an optical fiber cable is disclosed. The optical fiber cable includes an optical fiber. The optical fiber includes a core and a cladding. In addition, the optical fiber cable includes a primary buffer layer. The primary buffer layer is positioned around the optical fiber. The primary buffer layer is an outer coating around the optical fiber. The outer coating is made of a high temperature material such as high temperature acrylate. Moreover, the primary buffer layer is surrounded by a multi buffer layer. The multi buffer layer includes a first buffer layer and a second buffer layer. The first buffer layer is made of PTFE material. The second buffer layer is made of a polyimide material. Accordingly, the diameter of the primary buffer layer is more than 300 microns. However, the combination of material and limited diameter range does not provide sufficient mechanical and tensile strength to the optical fiber.

Further prior art, US6804442, discloses an optical fibre with a core region, a first coating layer surrounding the core region and a second coating layer surrounding the first coating layer; wherein the first coating layer is made of UV curable acrylates , the first coating layer has a first diameter of 95 µm or 125 µm and a modulus of 1 MPa; the second coating layer is made of UV curable acrylates, the second coating layer has a second diameter of 120 µm or 200 µm and a modulus of 0.7 GPa.

In light of the above stated discussion, there exists a need for an optical fiber having required strength for in-house applications.

### SUMMARY

According to one embodiment, an optical fiber comprises a core region defined by a region around a central longitudinal axis of the optical fiber, a cladding region surrounding the core region, a first coating layer surrounding the cladding region, a second coating layer surrounding the first coating layer and a third coating layer surrounding the second coating layer. The first coating layer is made of UV curable acrylates. The first coating layer has a first diameter in a range of 150 µm - 300 µm. The first coating layer has a modulus in a range of 0.3 MPa - 3 Mpa. The second coating layer is made of UV curable acrylates. The second coating layer has a second diameter in a range of 300 µm - 400 µm. The second coating layer has a modulus in a range of 0.5 MPa - 1.2 Gpa. The third coating layer is made of a polyimide material. The third coating layer has a third diameter in a range of 350 µm - 450 µm. The third coating layer has a modulus of greater than 1.2 Gpa. The range of diameter and a type of material used for the first coating layer, the second coating layer and the third coating layer provides strength greater than or equal to 5GPa to the optical fiber.

Embodiments of the present disclosure substantially eliminate or at least partially address the aforementioned problems in the prior art, and provides an optical fiber for indoor applications.

The optical fiber has strength greater than or equal to 5 GPa. The optical fiber is of reduced size.

The optical fiber can be directly deployed for in-house applications without any need of cabling or buffering over the optical fiber and hence reduces cost of manufacturing. Moreover, the optical fiber has crush resistant properties suitable for an indoor staple installation and can withstand harsh environment. The optical fiber is flexible and can be resist effects of chemicals and moisture in contact.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

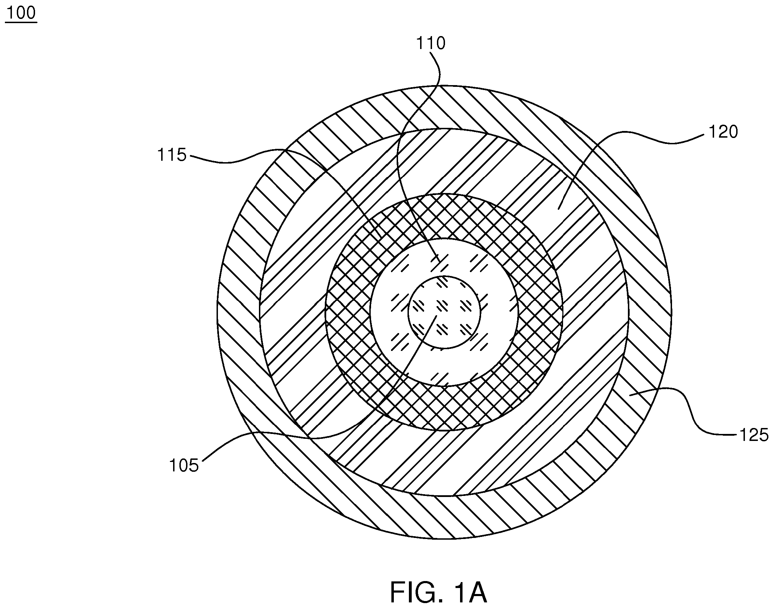

FIG. 1A illustrates a cross sectional view of an optical fiber, in accordance with an embodiment of the present disclosure; and

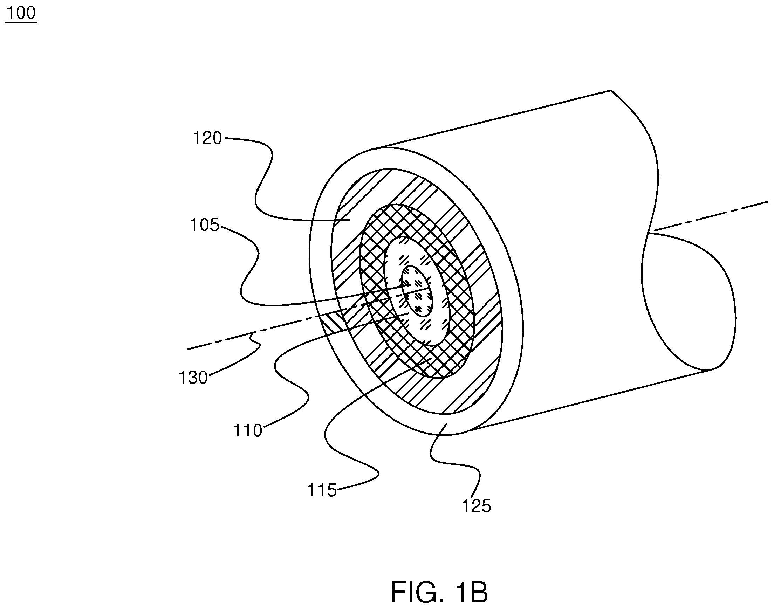

FIG. 1B illustrates a perspective view of the optical fiber of FIG. 1A, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

**FIG. 1A** illustrates a cross-sectional view of an optical fiber **100,** in accordance with an embodiment of the present disclosure. The optical fiber **100** is a fiber used for transmitting information as light pulses from one end to another. The optical fiber **100** is a thin strand of glass or plastic capable of transmitting optical signals. In addition, the optical fiber **100** allows transmission of information in the form of optical signals over long distances. In addition, the optical fiber **100** allows the transmission of information at high bandwidth. In general, a bandwidth is a measure of data-carrying capacity of the optical fiber **100.** In an embodiment of the present disclosure, the optical fiber **100** is a small diameter fiber.

In an embodiment of the present disclosure, the optical fiber **100** is utilized for broadband communication applications. In another embodiment of the present disclosure, the optical fiber **100** may be utilized for other applications. Moreover, the optical fiber **100** complies with specific telecommunication standards. The telecommunication standards are defined by International Telecommunication Union-Telecommunication (hereinafter "ITU-T"). In an embodiment of the present disclosure, the optical fiber **100** is compliant with G.657 recommendation standard of ITU-T. Furthermore, the ITU-T G.657 recommendation describes geometrical, mechanical and transmission attributes of a single mode bend insensitive optical fiber (shown as the optical fiber **100**).

In an embodiment of the present disclosure, the optical fiber **100** is a bend insensitive optical fiber. The bend insensitive optical fiber is characterized to have low sensitivity to fiber macro-bends and micro-bends. Further, the ITU-T G.657 standard defines a plurality of characteristics associated with the optical fiber **100.** The plurality of characteristics includes a mode field diameter, a cladding diameter, a cable cut-off wavelength, a macro bending loss, a dispersion and a refractive index. In addition, the plurality of characteristics includes a core concentricity error, a cladding non-circularity, an attenuation coefficient and the like.

The cladding non-circularity is defined as a percentage difference between a maximum radial deviation and minimum radial deviation between a center of core and cladding of the optical fiber **100** normalized to the diameter of the body. In an embodiment of the present disclosure, the optical fiber **100** has the cladding non-circularity parameter of less than or equal to 1 %. The core concentricity error is defined as a scalar distance between the center of the core and the center of the cladding in micrometers. In an embodiment of the present disclosure, the optical fiber **100** has a core concentricity error of less than or equal to 0.5 µm. Furthermore, the telecommunication standards are defined by International Electrotechnical Commission (hereinafter "IEC"). In an embodiment of the present disclosure, the optical fiber **100** is compliant with IEC 60794-2 standard.

Going further, the optical fiber **100** is manufactured by adopting a plurality of manufacturing techniques. In general, the manufacturing of optical fibers has two major stages. The first stage involves the manufacturing of optical fiber preforms and the second stage involves drawing the optical fibers from the optical fiber preforms. In general, the quality of optical fibers is determined during the manufacturing of the optical fiber preforms. So, a lot of attention is paid towards the manufacturing the optical fiber preforms. These optical fiber preforms include an inner glass core surrounded by a glass cladding having a lower index of refraction. Also, these preforms are manufactured as per the requirements related to a specific refractive index profile, a core diameter, a cladding diameter and the like. The plurality of manufacturing techniques adopted for manufacturing the optical fiber **100** includes but may not be limited to modified chemical vapor deposition, outside vapor deposition, vapor axial deposition, rod-in cylinder (RIC) and the like.

The optical fiber **100** includes a core region **105** a cladding region **110,** a first coating layer **115,** a second coating layer **120** and a third coating layer **125.** The core region **105** is an inner part of the optical fiber **100.** Moreover, the core region **105** and the cladding region **110** are formed during the manufacturing stage of the optical fiber **100.** The core region **105** is defined by a region around a central longitudinal axis **130** of the optical fiber **100.** In general, the core region **105** is defined as the region around the central longitudinal axis **130** of the optical fiber **100** through which light transmits. Furthermore, the central longitudinal axis **130** is associated with the optical fiber **100.** In general, the central longitudinal axis **130** of the optical fiber **100** passes through a geometrical center of the optical fiber **100** and is parallel to a length of the optical fiber **100** (as shown in **FIG. 1B**). In addition, the central longitudinal axis **130** is mutually perpendicular to a cross-section of the optical fiber **100.** The core region **105** is doped with at least one of germanium, fluorine or a combination of both.

Further, the cladding region **110** of the optical fiber **100** surrounds the core region **105** of the optical fiber **100.** In general, the cladding region **110** is defined as a region around the core region **105** which confines a light ray to travel within the core region **105** of the optical fiber **100.** In addition, the cladding region **110** confines the light ray in the core region **105** based on total internal reflection at a core-cladding interface. In general, total internal reflection in optical fiber **100** is a phenomenon of complete reflection of the light ray reaching the core-cladding interface. Furthermore, the core region **105** has a refractive index which is greater than a refractive index of the cladding region **110.** In an embodiment of the present disclosure, the core region **105** has a higher refractive index than the cladding region **110.** In an embodiment of the present disclosure, the cladding region **110** of the optical fiber **100** has a diameter in a range of 124 µm - 126 µm.

Going further, the optical fiber **100** includes the first coating layer **115,** the second coating layer **120** and the third coating layer **125.** The first coating layer **115** surrounds the cladding region **110** of the optical fiber **100.** In an embodiment of the present disclosure, the first coating layer **115** is an inner coating layer. In an embodiment of the present disclosure, the first coating layer **115** is in direct contact with the cladding region **110.** In another embodiment of the present disclosure, one or more adhesive layers are present between the first coating layer **115** and the cladding region **110.**

The first coating layer **115** serves as a cushion and protects the optical behavior of the optical fiber **100** during bending, cabling and spooling of the optical fiber **100.** In addition, the first coating layer **115** protects the core region **105** and preserves the ability of the optical fiber **100** to transmit signals. In an embodiment of the present disclosure, the first coating layer **115** is present between the cladding region **110** and the second coating layer **120.** Moreover, the first coating layer **115** has a first diameter. The first diameter lies in the range of 150 µm - 300 µm.

Further, the first coating layer **115** is formed of a material having low Young's modulus. The first coating layer **115** has a modulus in a range of 0.3 MPa to 3 MPa. The modulus or Young's modulus is a measure of stiffness of an elastic material. The first coating layer **115** is made of ultraviolet curable acrylates (hereinafter "UV curable acrylates"). Furthermore, the second coating layer **120** surrounds the first coating layer **115.** In an embodiment of the present disclosure, the second coating layer **120** is an intermediate coating layer. In an embodiment of the present disclosure, the second coating layer **120** is in direct contact with the first coating layer **115.** In another embodiment of the present disclosure, the one or more adhesive layers are present between the second coating layer **120** and the first coating layer **115.** Also, the second coating layer **120** is made of UV curable acrylates. UV curable acrylates provide mechanical strength to the optical fiber **100.** UV cured acrylate material have low Young's modulus. Furthermore, the second coating layer **120** has a second diameter. The second diameter lies in the range of 300 µm - 400 µm. The second coating layer **120** has a modulus in a range of 0.5 MPa - 1.2 GPa. In an embodiment of the present disclosure, the value of modulus for the second coating layer **120** is selected based on the modulus value of the first coating layer **115.**

Furthermore, the third coating layer **125** surrounds the second coating layer **120.** In an embodiment of the present disclosure, the third coating layer **125** is an outer coating layer. In an embodiment of the present disclosure, the third coating layer **125** is in direct contact with the second coating layer **120.** In another embodiment of the present disclosure, the one or more adhesive layers are present between the third coating layer **125** and the second coating layer **120.** The third coating layer **125** protects the optical fiber **100** from environmental exposure, mechanical damages, chemical attacks and the like. In addition, the third coating layer **125** enables an easy deployment of optical fiber **100.** The third coating layer **125** is made of a polyimide material. In addition, the polyimide materials provide mechanical strength to the optical fiber **100.** Furthermore, the third coating layer **125** has a third diameter. The third diameter lies in the range of 350 µm - 450 µm. The third coating layer **125** has a modulus of greater than 1.2 GPa.

The combination of the first coating layer **115,** the second coating layer **120** and the third coating layer **125** maintains the optical performance of the optical fiber **100.** In addition, the combination of the first diameter and the material of the first coating layer **115,** the second diameter and the material of the second coating layer **120** and the third diameter and the material of the third coating layer **125** provides strength greater than or equal to 5 Giga-Pascal (hereinafter "GPa"). The combination of material and diameter of different layers of the optical fiber provides mechanical and tensile strength to the optical fiber. Different material combinations of the first coating layer **115,** the second coating layer **120** and the third coating layer **125** may be used to maintain the optical performance and strength of the optical fiber **100.** Moreover, the optical fiber **100** has triple coatings to facilitate direct installation in in-house or harsh environments.

Furthermore, different diameter combinations associated with the first coating layer **115,** the second coating layer **120** and the third coating layer **125** may be used to maintain the strength of the optical fiber **100** to less than 5 GPa. In an embodiment of the present disclosure, the strength of the optical fiber **100** is no less than 5 GPa when the first coating layer **115** has a diameter of 150 µm, the second coating layer **120** has the diameter of 300 µm and the third coating layer **125** has the diameter of 350 µm. In another embodiment of the present disclosure, the strength of the optical fiber **100** is no less than 5 GPa when the first coating layer **115** has the diameter of 300 µm, the second coating layer **120** has the diameter of 400 µm and the third coating layer **125** has the diameter of 450 µm. In yet another embodiment of the present disclosure, the strength of the optical fiber **100** is no less than 5 GPa when the first coating layer **115** has the diameter of 225 µm, the second coating layer **120** has the diameter of 350 µm and the third coating layer **125** has the diameter of 400 µm.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An optical fiber (100) comprising:
a core region (105) defined by a region around a central longitudinal axis (130) of the optical fiber (100); a cladding region (110) surrounding the core region (105); a first coating layer (115) surrounding the cladding region (110); a second coating layer (120) surrounding the first coating layer (115); and
a third coating layer (125) surrounding the second coating layer (120), the first coating layer (115) is made of UV curable acrylates, the first coating layer (115) has a first diameter in a range of 150 µm - 300 µm, the first coating layer (115) has a Young's modulus in a range of 0.3 MPa - 3 MPa,
the second coating layer (120) is made of UV curable acrylates, the second coating layer (120) has a second diameter in a range of 300 µm - 400 µm, the second coating layer (120) has a Young's modulus in a range of 0.5
MPa - 1.2 GPa, the third coating layer (125) is made of a polyimide material, the third coating layer (125) has a third diameter in a range of 350 µm - 450 µm, the third coating layer (125) has a Young's modulus of greater
than 1.2 GPa and the range of diameter and a type of material used for the first coating layer (115), the second coating layer (120) and the third coating layer (125) provides strength greater than or equal to 5GPa to the optical fiber (100).

2. The optical fiber (100) as claimed in claim 1, wherein the optical fiber (100) is a bend insensitive fiber.

3. The optical fiber (100) as claimed in claim 1, wherein the cladding region (110) has a diameter in a range of 124 µm - 126 µm.

4. The optical fiber (100) as claimed in claim 1, wherein the optical fiber (100) has a cladding non-circularity parameter of less than or equal to 1 %.

5. The optical fiber (100) as claimed in claim 1, wherein the optical fiber (100) has a core concentricity error of less than or equal to 0.5 µm.

## Patentansprüche

1. Optische Faser (100), aufweisend:
einen Kernbereich (105), der durch einen Bereich um eine zentrale Längsachse (130) der optischen Faser (100) definiert ist;
einen Mantelbereich (110), der den Kernbereich (105) umgibt;
eine erste Überzugsschicht (115), die den Mantelbereich (110) umgibt;
eine zweite Überzugsschicht (120), die die erste Überzugsschicht (115) umgibt; und
eine dritte Überzugsschicht (125), die die zweite Überzugsschicht (120) umgibt,
die erste Überzugsschicht (115) ist aus UV-härtbaren Acrylaten hergestellt, die erste Überzugsschicht (115) hat einen ersten Durchmesser in einem Bereich von 150µm - 300µm, die erste Überzugsschicht (115) hat einen Elastizitätsmodul in einem Bereich von 0,3MPa - 3MPa,
die zweite Überzugsschicht (120) ist aus UV-härtbaren Acrylaten hergestellt, die zweite Überzugsschicht (120) hat einen zweiten Durchmesser in einem Bereich von 300µm - 400µm, die zweite Überzugsschicht (120) hat einen Elastizitätsmodul in einem Bereich von 0,5MPa bis 1,2GPa,
die dritte Überzugsschicht (125) ist aus einem Polyimidmaterial hergestellt, die dritte Überzugsschicht (125) hat einen dritten Durchmesser in einem Bereich von 350µm - 450µm, die dritte Überzugsschicht hat einen Elastizitätsmodul, der größer als 1,2GPa ist, und
der Durchmesserbereich und ein Typ des für die erste Überzugsschicht (115), die zweite Überzugsschicht (120) und die dritte Überzugsschicht (125) verwendeten Materials verschaffen der optischen Faser (100) eine Festigkeit, die größer oder gleich 5GPa ist.

2. Optische Faser (100), wie in Anspruch 1 beansprucht, wobei die optische Faser (100) eine biegungsunempfindliche Faser ist.

3. Optische Faser (100), wie in Anspruch 1 beansprucht, wobei der Mantelbereich (110) einen Durchmesser in einem Bereich von 124µm - 126µm hat.

4. Optische Faser (100), wie in Anspruch 1 beansprucht, wobei die optische Faser (100) einen Mantelunrundheitsparameter von weniger oder gleich 1% hat.

5. Optische Faser (100), wie in Anspruch 1 beansprucht, wobei die optische Faser (100) einen Kernkonzentrizitätsfehler von weniger als oder gleich 0,5µm hat.

## Revendications

1. Fibre optique (100) comprenant :
une zone d'âme (105) définie par une zone autour d'un axe central longitudinal (130) de la fibre optique (100) ;
une zone de gainage (110) entourant la zone d'âme (105) ;
une première couche de revêtement (115) entourant la zone de gainage (110) ;
une deuxième couche de revêtement (120) entourant la première couche de revêtement (115) ; et
une troisième couche de revêtement (125) entourant la deuxième couche de revêtement (120),
la première couche de revêtement (115) étant constituée d'acrylates durcissables à l'UV,
la première couche de revêtement (115) présentant un premier diamètre se situant dans la plage de 150 µm - 300 µm,
la première couche de revêtement (115) présentant un module de Young se situant dans la plage de 0,3 MPa - 3 MPa,
la deuxième couche de revêtement (120) étant constituée d'acrylates durcissables à l'UV,
la deuxième couche de revêtement (120) présentant un deuxième diamètre se situant dans la plage de 300 µm - 400 µm,
la deuxième couche de revêtement (120) présentant un module de Young se situant dans la plage de 0,5 MPa - 1,2 GPa,
la troisième couche de revêtement (125) étant constituée d'un matériau en polyimide,
la troisième couche de revêtement (125) présentant un troisième diamètre se situant dans une plage de 350 µm - 450 µm,
la troisième couche de revêtement (125) présentant un module de Young supérieur à 1,2 GPa, et
la fourchette de diamètre et un type de matériau utilisé pour la première couche de revêtement (115), la deuxième couche de revêtement (120) et la troisième couche de revêtement (125) conférant une résistance supérieure ou égale à 5 GPa à la fibre optique (100).

2. Fibre optique (100) selon la revendication 1, selon laquelle la fibre optique (100) est une fibre insensible à la flexion.

3. Fibre optique (100) selon la revendication 1, selon laquelle la zone de gainage (110) présente un diamètre se situant dans la plage de 124 µm - 126 µm.

4. Fibre optique (100) selon la revendication 1, selon laquelle la fibre optique (100) présente un paramètre de gainage non-circulaire inférieur ou égal à 1 %.

5. Fibre optique (100) selon la revendication 1, selon laquelle la fibre optique (100) présente une erreur de concentricité d'âme inférieure ou égale à 0,5 µm.
